# EUROPÄISCHE PATENTANMELDUNG

(11) **EP 0 640 422 A1**
(43) Veröffentlichungstag der Anmeldung: **01.03.1995**
(21) Anmeldenummer: 94111564.4
(22) Anmeldetag: 25.07.1994
(51) Int. Cl.: B23D 61/02

(54) **Kreissägeblatt**

(30) Priorität: 24.08.1993 DE 4328482
(71) Anmelder: FGW - Forschungsgemeinschaft Werkzeuge und Werkstoffe e.V., D-42859 Remscheid (DE)
(72) Erfinder: Münz, Uwe V., D-42899 Remscheid (DE)
(74) Vertreter: Patentanwälte Dr. Solf & Zapf

(57) **Zusammenfassung**

Die Erfindung betrifft ein Kreissägeblatt aus Metall mit einem schneidenden Zahnkranz und einem zentralen Spannloch, gekennzeichnet durch wenigstens eine Ringdämpfungszone (6), die zwischen dem Spannloch (4) und dem Zahnkranz (7) angeordnet ist und eine Vielzahl von voneinander durch Trennschlitze (9) getrennte, seitlich nebeneinander angeordnete, sich zum Zahnkranz (7) erstreckende Dämpfungsstege (8).

## Beschreibung

Die Erfindung betrifft ein Kreissägeblatt aus Metall mit einem schneidenden Zahnkranz und einem zentralen Spannloch.

Der Zahnkranz derartiger Kreissägeblätter wird peripher zur spanenden Bearbeitung mit Sägezähnen ausgebildet oder zur schleifenden Bearbeitung mit Segmenten ausgerüstet.

Im Betrieb auf das Kreissägeblatt wirkende Lasten führen zur Minderung der Steifigkeit. Mangelnde Steifigkeit erzeugt Auslenkungen aus der Blattebene, die Vibrationen und damit Geräusche, Ungenauigkeiten in der Maßhaltigkeit des Schnittes, erweiterte Schnittspaltbreiten mit erhöhtem Materialverlust, geringere Schnittgeschwindigkeiten, geringere Schnittqualität und geringere Standzeiten verursachen.

Dehnungsschlitze mit bestimmter Form und Verteilung im Kreissägeblatt sollen die Ausdehnungen auffangen und auch die erforderliche Steifigkeit gewährleisten (US-A-1 083 645, EP-A1-0 141 042). Die durch Vibrationen erzeugte Lärmbelästigung soll durch geräuschdämpfende Mittel, wie wellenförmige Unterbrechungsschlitze (DE-A1-3 405 407, DE-A1-3 611 207) oder durch wellenförmige Einschnitte und eine einschnittfreie ringförmige stabilitätserhöhende Spannungszone im Innenbereich des Sägeblatts (EP-B1-0 239 676) vermieden werden.

Aus dem DE-GM 88 14 351 ist zur geräuschmindernden Schwingungsdämpfung bekannt, im Sägeblattkörper gruppiert, durch benachbarte, mit Laserstrahl erzeugte, schmale Durchgangsschlitze Stege zu bilden, die mit einem Spreizkörper bereichsweise in gegenseitige Anlage gebracht werden.

In der EP-B1-0 211 423 sind die Probleme, die durch die im Betrieb auf das Sägeblatt wirkenden Lasten entstehen und bekannte Problemlösungen Zusammengefaßt und qualifizierend beschrieben, wobei festgestellt wird, daß bisher keine Lösung gefunden werden konnte, alle durch Dehnung und Deformationen verursachte negativen Wirkungen komplex zu kompensieren. Als Lösung wird in dieser Druckschrift vorgeschlagen, ein Sägeblatt nach Art eines Speichenrades mit einem geschlossenen, mit Zähnen oder Segmenten bestückten Außenkranz, einem Spannloch aufweisenden Nabenbereich und Speichen zwischen dem Nabenbereich und dem Außenkranz auszubilden, wobei mit Druckgebern die Speichen vom Zentrum aus mit einer einstellbaren Druckkraft beaufschlagbar sind. Verformungen, die aus thermischen Einflüssen oder Fliehkräften oder dergleichen resultieren, sollen mit den Druckgebern derart ausgeglichen werden, daß keine Ausbuchtungen mehr auftreten.

Die bekannte Vorrichtung zum Ausgleich aller Verformungen ist sehr kompliziert und störanfällig, so daß sich ihre Anwendung allenfalls bei von Hause aus besonders aufwendigen Kreissägeblättern empfiehlt.

Aufgabe der Erfindung ist, mit einfachen Mitteln die negativen, komplexen Wirkungen der im Betrieb auf ein Sägeblatt wirkenden Lasten zu kompensieren.

Diese Aufgabe wird durch die Merkmale des Anspruchs 1 gelöst. Vorteilhafte Weiterbildungen der Erfindung werden in den Unteransprüchen gekennzeichnet.

Anhand der Zeichnung wird die Erfindung im folgenden näher erläutert. Es zeigen:
- Fig. 1: eine Draufsicht auf das erfindungsgemäße Kreissägeblatt;

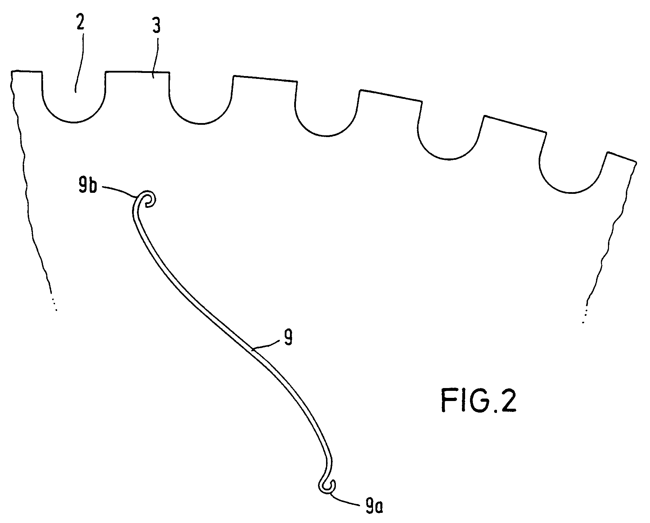

- Fig. 2: eine Detailansicht des Kreissägeblatts von Fig. 1 im Bereich der Ringdämpfungszone.

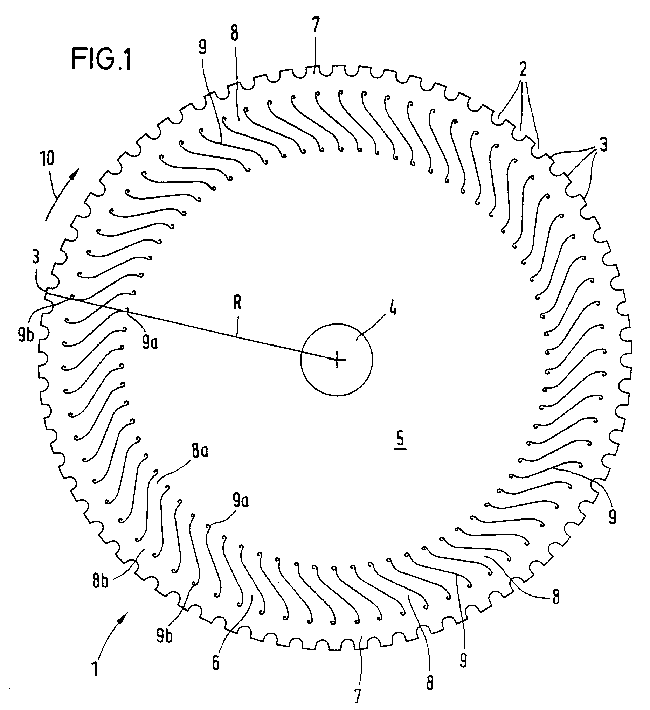

Das in Fig. 1 gezeigte Kreissägeblatt ist als Stammblatt 1 ohne Bestückung mit Schneidsegmenten abgebildet und zum Einsatz in der Natur- und Kunststeinindustrie sowie im Hoch- und Tiefbau verwendbar. Peripher weist das Stammblatt 1 durch radiale Schneidschlitze 2 voneinander getrennte Segmentstege 3 gleichmäßig am Umfang verteilt auf. Die Segmentstege 3 werden mit Schneidsegmenten bestückt (nicht dargestellt). Das dargestellte Stammblatt 1 hat 70 Segmentstege 3 bzw. 70 Schneidschlitze 2. Der Durchmesser des abgebildeten Stammblatts beträgt etwa 1000 mm. Das Zentrum des Stammblatts 1 ist von einem Spannloch 4 durchsetzt. Anschließend an das Spannloch 4 weist das Stammblatt 1 in radialer Richtung eine ringförmige Kern- bzw. Innenzone 5 auf, an deren Außenrand sich eine Ringdämpfungszone 6 anschließt, der eine Kranzzone 7 mit den Schneidschlitzen 2 und den Segmentstegen 3 am Umfangsrand des Stammblatts 1 folgt. Die Ringdämpfungszone 6 weist eine Vielzahl von seitlich voneinander beabstandeten bzw. getrennten Dämpfungsstegen 8 auf, auf deren Gestalt und Funktion nachstehend näher eingegangen wird.

Die Breite der Ringdämpfungszone 6, das heißt ihre Abmessung in radialer Richtung beträgt ca. 0,2 · r_{b}, wobei r_{b} der Radius des Stammblatts 1 ist. Die Breite der Kranzzone 7, das heißt ihre radiale Abmessung vom Außenrand der Ringdämpfungszone 6 zum Außenumfangsrand des Stammblatts 1 beträgt ca. 0,1 · r_{b}. Die Stärke der Innenzone 5, das heißt ihre radiale Erstreckung beträgt ca. 0,7 · r_{b}. Die Tiefe der Schneidschlitze 2 in der Kranzzone 7 beträgt etwa die halbe Stärke dieser Zone.

Die Dämpfungsstege 8 in der Ringdämpfungszone 6 weisen jeweils im wesentlichen eine identische S-Form auf und sind durch das gleichmäßig beabstandete Einbringen von S-förmigen Trennschlitzen 9 gebildet, die zumindest grob radial ausgerichtet über die volle Breite der Ringdämpfungszone 6 verlaufen. Endseitig läuft jeder der S-förmigen Trennschlitze 9 in einer verschlungenen Schneckenform aus, die bei der Schlitzausbildung auf dem Gebiet von Kreissägeblättern an sich bekannt ist und dazu dient, daß sich am Schlitzende keine Kerbrisse ausbilden.

Die Anzahl der Dämpfungsstege 8 entspricht zweckmäßigerweise der Anzahl der Schneidschlitze 2 bzw. der Segmentstege 3, so daß vorliegend 70 Dämpfungsstege 8 vorhanden sind.

Im inneren Endbereich 8a sind die Stege 8 schmaler ausgebildet als an dem Kranz 7 zugewandten äußeren Endbereich 8b. Das heißt, daß benachbarte Trennschlitze 9 mit ihren zum Scheibenzentrum 4 weisenden inneren Enden 9a näher zueinander liegen als mit ihren zum Außenumfangsrand des Stammblatts 1 weisenden Außenenden 9b.

Die Stege 8 und damit die Trennschlitze 9, deren Schlitzbreite z.B. ca. 2,5 mm beträgt, sind mit ihrer Längserstreckung gegenüber einem streng radialen Verlauf in bezug auf das Stammblatt 1 gedreht derart ausgerichtet, daß in Drehrichtung 10 das kranznahe Ende 9b eines Schlitzes 9 auf demselben Radius R liegt, wie das zentrumnahe Ende 9a des nacheilenden übernächsten Schlitzes 9. Das kranznahe Ende 9b jedes Schlitzes 9 beginnt in radialer Richtung unter einem Steg 3, insbesondere mittig unter dem Steg 3.

Die Dämpfungsstege 8 in der Ringdämpfungszone 6 vermögen sich aufgrund ihrer S-förmigen Gestalt bei hohen Drehzahlen aufgrund der Fliehkräfte zu strecken. Mit den Dämpfungsstegen 8 sowie durch die Wahl der Abmessung, Anzahl, Form und Ausrichtung zum Radius dieser Stege lassen sich, an die jeweiligen Sägeblattart angepaßt, auf das Sägeblatt einwirkende Lasteffekte, vor allem Schwingungen breitbandig kompensieren.

Die Erfindung ist nicht auf die in der Zeichnung dargestellte Form der Dämpfungsstege, ihre Breite und ihre Lage auf der Scheibe beschränkt. Vielmehr können anstelle identischer Dämpfungsstege unterschiedlich, beispielsweise unterschiedlich lang ausgebildete Dämpfungsstege zum Einsatz kommen, wobei kurze und lange Dämpfungsstege beispielsweise alternierend aufeinander folgen. Anstelle S-förmiger Dämpfungsstege können die Stege auch linear verlaufend ausgebildet sein. Für eine möglichst breitbandige Kompensation von Sägeblattvibrationen ist es jedoch von Vorteil, die Dämpfungsstege nicht streng radial verlaufend, sondern von einer radialen Richtung abweichend anzuordnen. Ferner können weniger oder mehr Dämpfungsstege als Schneidschlitze/Segmentstege vorgesehen sein. Schließlich kann anstelle einer einzigen Ringdämpfungszone eine Mehrzahl, insbesondere zwei derartige Zonen, konzentrisch mit gegenseitigem Abstand vorgesehen sein.

## Patentansprüche

1. Kreissägeblatt aus Metall mit einem schneidenden Zahnkranz und einem zentralen Spannloch,
**gekennzeichnet** durch
wenigstens eine Ringdämpfungszone (6), die zwischen dem Spannloch (4) und dem Zahnkranz (7) angeordnet ist und eine Vielzahl von voneinander durch Trennschlitze (9) getrennte, seitlich nebeneinander angeordnete, sich zum Zahnkranz (7) erstreckende Dämpfungsstege (8).

2. Kreissägeblatt nach Anspruch 1,
dadurch **gekennzeichnet,**
daß die Ringdämpfungszone (6) angrenzend an den Zahnkranz (7) ausgebildet ist.

3. Kreissägeblatt nach Anspruch 1 und/oder 2,
dadurch **gekennzeichnet,**
daß die Ringdämpfungszone (6) eine Breite aufweist, die größer ist als die Breite des Zahnkranzes (7) und kleiner als eine sich nach innen zum zentralen Spannloch (4) anschließende Kernzone (5).

4. Kreissägeblatt nach einem oder mehreren der Ansprüche 1 bis 3,
dadurch **gekennzeichnet,**
daß die Dämpfungsstege (8) S-förmig verlaufend ausgebildet sind.

5. Kreissägeblatt nach einem oder mehreren der Ansprüche 1 bis 4,
dadurch **gekennzeichnet,**
daß die Enden (9a, 9b) der Trennschlitze (9) zwischen den Dämpfungsstegen (8) spiralförmig auslaufen.

6. Kreissägeblatt nach einem oder mehreren der Ansprüche 1 bis 5,
dadurch **gekennzeichnet,**
daß die Dämpfungsstege (8) am innen gelegenen Endbereich (8a) schmaler sind als die am außen gelegenen Endbereich (8b).

7. Kreissägeblatt nach einem oder mehreren der Ansprüche 1 bis 6,
dadurch **gekennzeichnet,**
daß die Dämpfungsstege (8) mit ihrer Längserstreckung gegenüber einem streng radialen Verlauf in bezug auf das Zentrum des Sägeblatts (1) gedreht derart ausgerichtet sind, daß in Drehrichtung (10) des Sägeblatts (1) das kranznahe Ende (9b) eines Trennschlitzes (9) auf demselben Radius (R) liegt, wie das zentrumnahe Ende (9a) des nacheilenden übernächsten Trennschlitzes (9).

8. Kreissägeblatt nach einem oder mehreren der Ansprüche 1 bis 7,
dadurch **gekennzeichnet,**
daß das kranznahe Ende (9b) jedes Dämpfungsstegs (8) in radialer Richtung unter einem peripheren Segmentsteg (3) bzw. Schneidsegment des Zahnkranzes (7), insbesondere mittig unter diesem Segment (3) angeordnet ist.

9. Kreissägeblatt nach einem oder mehreren der Ansprüche 1 bis 8,
dadurch **gekennzeichnet,**
daß die Anzahl der Dämpfungsstege (8) der Anzahl der Schneidschlitze (2) bzw. Segmentstege (3) im Zahnkranz (7) entspricht.

10. Kreissägeblatt nach einem oder mehreren der Ansprüche 1 bis 9,
dadurch **gekennzeichnet,**
daß die Breite der Ringdämpfungszone (6) in radialer Richtung etwa 0,2 · r_{b} ist, wobei r_{b} der Radius des Kreissägeblatts (1) ist.

11. Kreissägeblatt nach einem oder mehreren der Ansprüche 1 bis 10,
dadurch **gekennzeichnet,**
daß die Breite der Kranzzone (7) in radialer Richtung etwa 0,1 · r_{b} beträgt, wobei r_{b} der Radius des Kreissägeblatts (1) ist.

12. Kreissägeblatt nach einem oder mehreren der Ansprüche 1 bis 11,
dadurch **gekennzeichnet,**
daß die Stärke einer zwischen dem Spannloch (4) und der Ringdämpfungszone (6) angeordneten Innenzone (5) in radialer Richtung etwa 0,7 · r_{b} beträgt, wobei r_{b} der Radius des Kreissägeblatts (1) ist.
